Europäisches Patentamt

European Patent Office

Office européen des brevets

(19)

(11) Publication number: **0 025 47**

**A1**

(12) # EUROPEAN PATENT APPLICATION

(21) Application number: **79830045.5**

(22) Date of filing: **19.11.79**

(51) Int. Cl.³: **B 60 S 9/14**

(30) Priority: **13.09.79 IT 662079**

(43) Date of publication of application: **25.03.81**
**Bulletin 81/12**

(84) Designated Contracting States: **AT BE CH DE FR GB LU NL SE**

(71) Applicant: **Procacciante, Mario, Via Ruggero Settimo No 3, I-95128 Catania CAP (IT)**

(72) Inventor: **Procacciante, Mario, Via Ruggero Settimo No 3, I-95128 Catania CAP (IT)**

(54) **Hydraulic undercarriage.**

(57) A mechanism for parking automobiles lifts the automobiles hydraulically from the ground. As a result of this lifting the traction of the wheels of the automobile is transferred to the wheels of the undercarriage allowing the vehicle to be driven to the right or left side or to be turned.

EP 0 025 471 A1

## DESCRIPTION

## HYDRAULIC UNDERCARRIAGE

a mechanism the parking of automobiles with right and left sideways gears and right and left rotating gears which mo ve in the four above mentioned directions and is the invention of Mr.Mario Procacciante, an Italian citizen Living in Via Ruggero Settimo 3, Catania, Sicily.

a) The Hydraulic Urdercarriage uses the traction power of the engine of the automobile to which it is attached. By means of a mechanical clutch a hydraulic pump which injects hydrau lic oil by pressure into four cylinders is activated and the automobile is raised 25 cm. from the ground. As a result of this raising of the automobile the traction of the wheels of the automobile is transferred to the wheels of the undercarriage and there, with same traction power of the automobile, by engaging first or reverse gear the movements in four directions sideways, to right or left and rotatory to right or left are brought about.

b) The purpose of this invention is to park the automobile in the exact space of its own dimensions and to turn it round in the same space without manoeuvring it in forward and reverse directions, It can further serve to simplify the maintenance, changing of the wheels or any other repairs of the car.

c) Drawings of the details of the invention:

1. A hydraulic oil tank of a capacity of 5 litres with a high pressure tube that goes to the pump and a return tube from the distributor to the above mentioned tank.

2. Control knob number one to put in action the pulley with a clutch and cog wheels rotating clockwise to work the pump (plate 1, no.4 plate 3 no. 2)

3) Hydraulic pump, AM/2/20 D minimum capacity 1500 revolutions/n.8, 6 litres, maximum pressure 180 a.t.m., power 100 a.t.m. 2,75 H.P. (plate 1, no 3, plate 3 no. 1 plate 4) which by means of a distributor valve series WDM, type 3, 8 permitted capacity up to 20 lit/min, maximum pressure 180 a.t.m. with a maximum by pass valve incorporated, adjustable to three positions, four directions, drive and exhaust (plate 1, no. 5 plate 6) sends pressure to the four hydraulic plunging single acting cylinders shank mm 55 stroke mm 145 with head and cog wheels cased for a synchronized outlet of the above mentioned cylinders. (Plate 1 no. 11, plate 7 no. 7)

By means of the distributor valve which causes the four cylinders to discharge, one hydraulic single acting plunging cylinder only shank mm 55 stroke mm 165 with cogged sheathing refills and works to bring the undercarriage back into position ant to lower the automobile. (Plate 1 no. 12 plate 10 no. 7) When the automobile is lifted up the sliding gearshift fork with a central pinion, return, spring and supporting thrust bearings, with a hexagonal hinged axle with se aled automatic release support is put into action by the cylinders (plate 1 no. 7 plate 7 no. 1) and fits into the two cog wheels, one neutral and one fixed, situated in the front right axle shaft (plate 1 no. 6 plate 8 no. 1) and there transmits the driving force of the automobile to the two turning axles with four wheels one neutral and one driving at the front and one neutral and driving at the back.

The said axles, with wheels·with their relative gearshift forks on needle bearings (plate 1 no. 15, plate 7 no. 6) are mounted on an iron classis with central supports for the cylinders (plate 1 no. 17, plate 7 no. 9) The traction of the automobile is transmitted to the undercarriage throu gh the pinion as indicated above (plate 1 no. 7, plate 7 no. 1), the pinion links to a T shaped transmission, rate I/IU with a linking axle to two transmissions at right angle, rate I/IU, linked to the turning axles (plate 1 no. 8 plate 7 no 3)

4. Control knob Number 2 serves to put into action a gear shift fork that pushes the axle with one frontal and two late ral cog wheels to obtain a change of direction in turning (plate 1 no. 10 plate 7 no. 4) To obtain a balanced and synchronized raising of the automobile two angular pantographs are installed with slinding hinges (plate 1 no. 13 plate 9 no. 1) All the above undercarriage is fixed under the automobile with four bolts. The braking action of the undercarriage comes through the use of the automobile.

N.B. This undercarriage may be applied to all vehicles.

0025471

<u>CLAIMS</u>

1. Pulley with clutch with clockwise rotating frontal cog wheels (Plate 1 no. 4, plate 3 no. 2) to obtain the acti on of the pump.
2. Angular panotograph for the balanced raising of the vehicle (plate 1 no. 6 plate 8 no. 1)
3. Gearshift fork with sliding pinion wtth returm spring and supporting thrust bearings with automatic axle (plate 1 no 7 plate 7 no. 1)
4. Cogged axle for changing direction of rotation.
5. This invention covers the idea both of the movement that vehioles can effect in left and right sideways directions and in two rotatory directions and the total raising of vehicles. The said movements and liifiing may be put into practice for the first time with application of this mecanism which is the subject of the invention descri bed above.

TAV. N° 2

TAV. N° 5

002547

8/10

TAV. N° 8

TAV. N° 9

## European Patent Office

## EUROPEAN SEARCH REPORT

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | US − A − 3 002 577 (J. WILLIAMS)<br>* fig. 1, position 34 *<br>−−<br>US − A − 1 928 305 (G.R. BLAKESLEY)<br>* fig. 1, position 30 *<br>−−<br>DE − U − 7 230 787 (P. LENZEN)<br>* fig. 2 and 3 *<br>−−<br>DE − C − 903 541 (O. ZIMMERMANN)<br>* fig. 4 *<br>−−<br>DE − C − 594 601 (A. SVOBODA)<br>* entire document *<br>−−<br>DE − C − 584 929 (A. SVOBODA)<br>* entire document *<br>−−<br>DE − C − 537 726 (O. HOFFMANN)<br>* entire document *<br>−−−− | 1<br><br>1<br><br>2<br><br>3,4<br><br>5 | B 60 S 9/14 |
| A | | | TECHNICAL FIELDS SEARCHED (Int.Cl.3) |
| A | | | B 60 S 9/00 |

CATEGORY OF CITED DOCUMENTS

X: particularly relevant
A: technological background
O: non-written disclosure
P: intermediate document
T: theory or principle underlyi
   the invention
E: conflicting application
D: document cited in the
   application
L: citation for other reasons

&: member of the same paten
   family,
   corresponding document

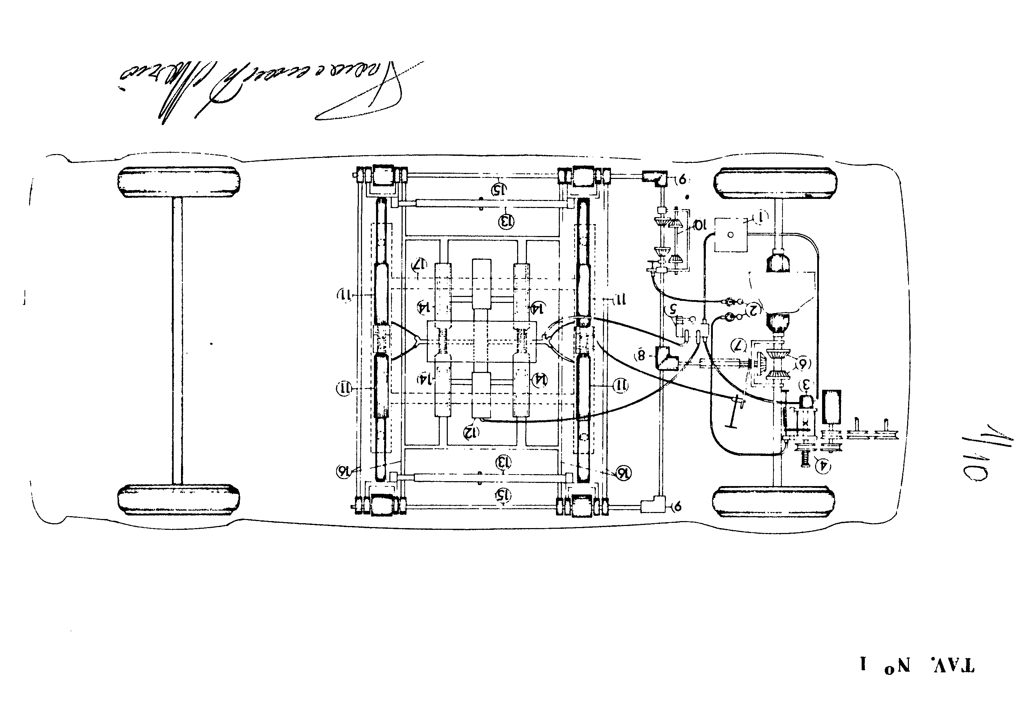

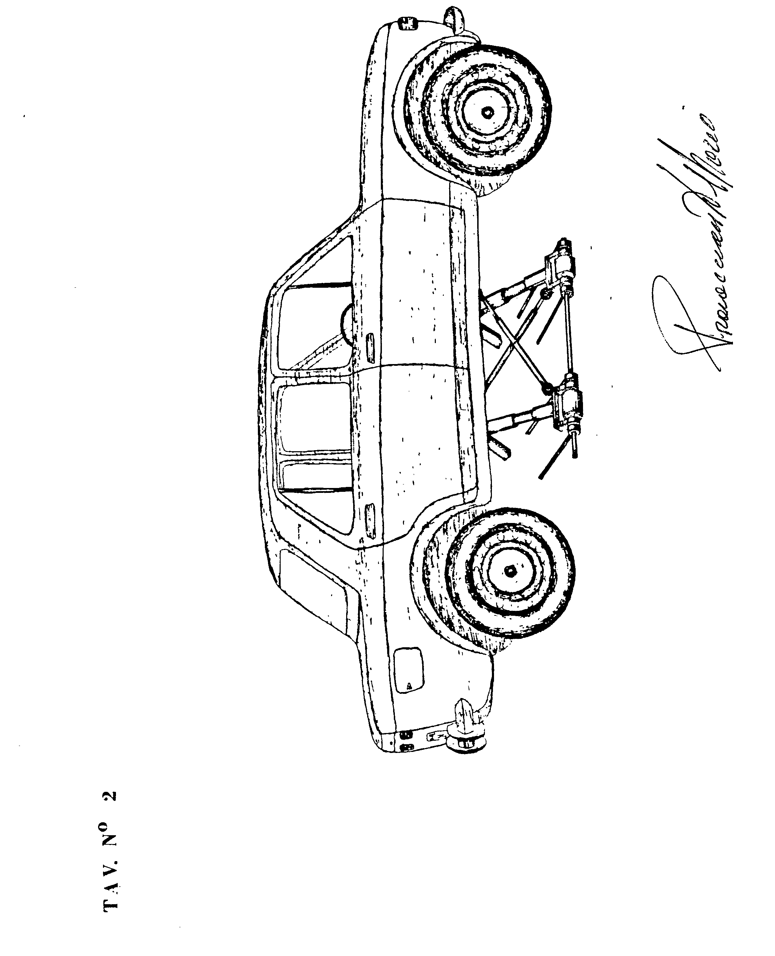

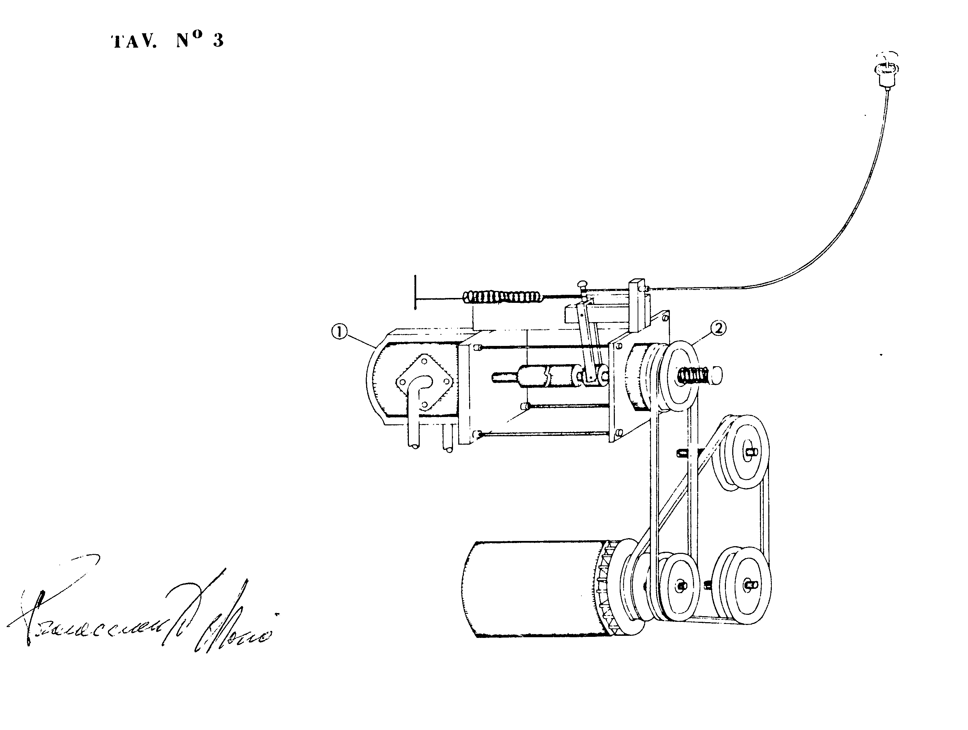

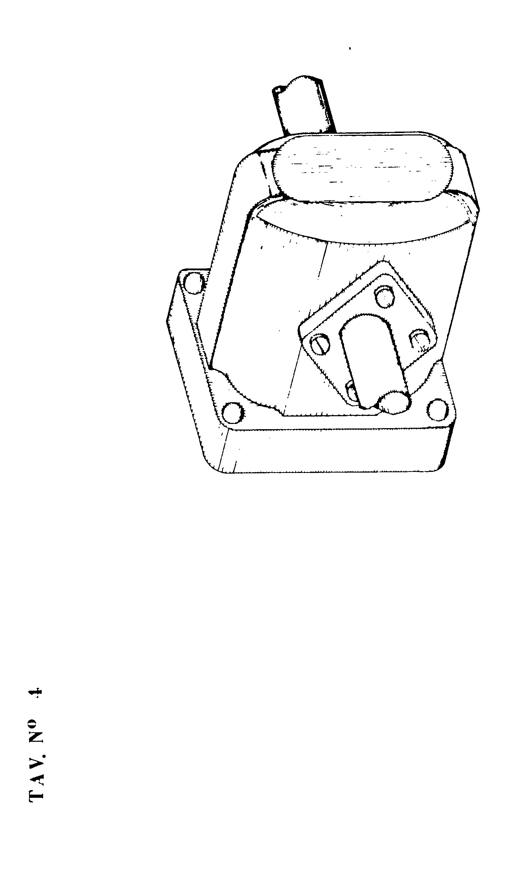

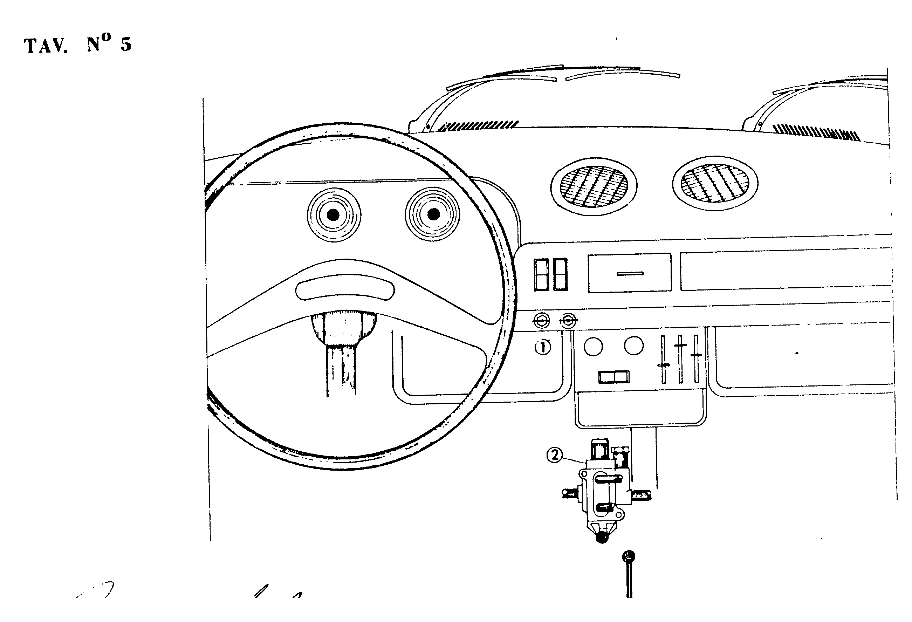

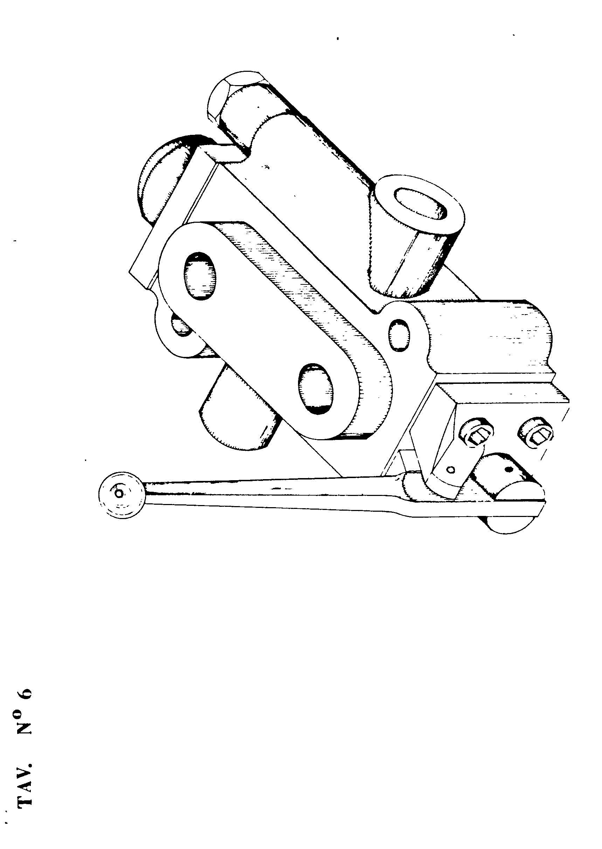

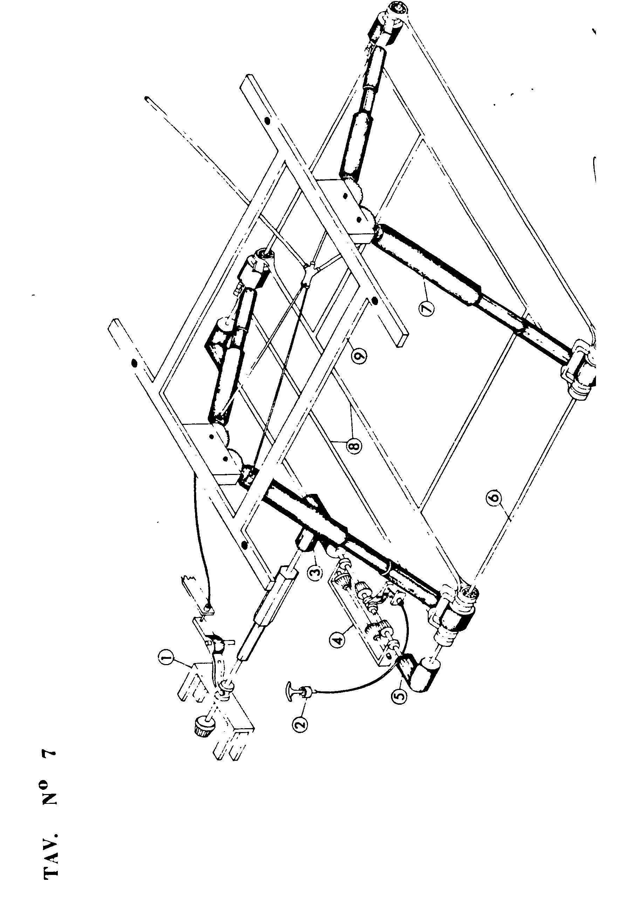

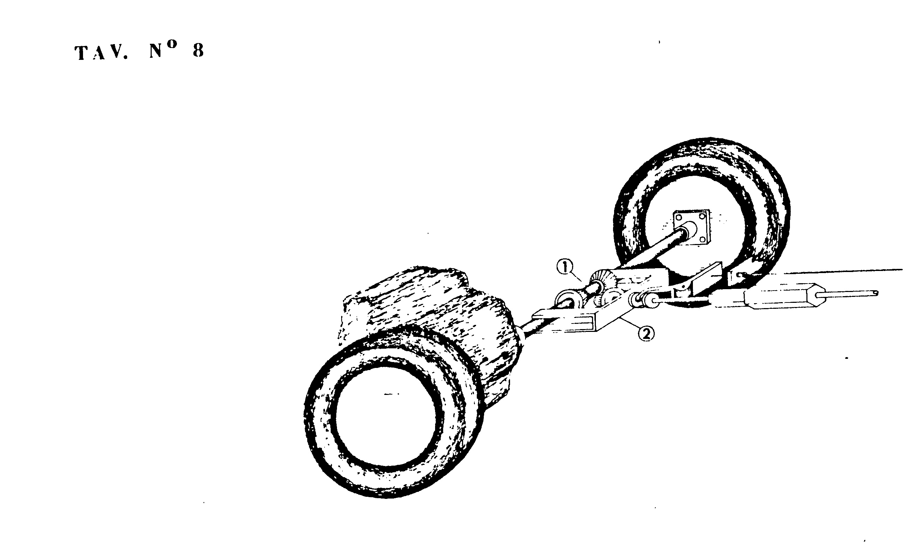

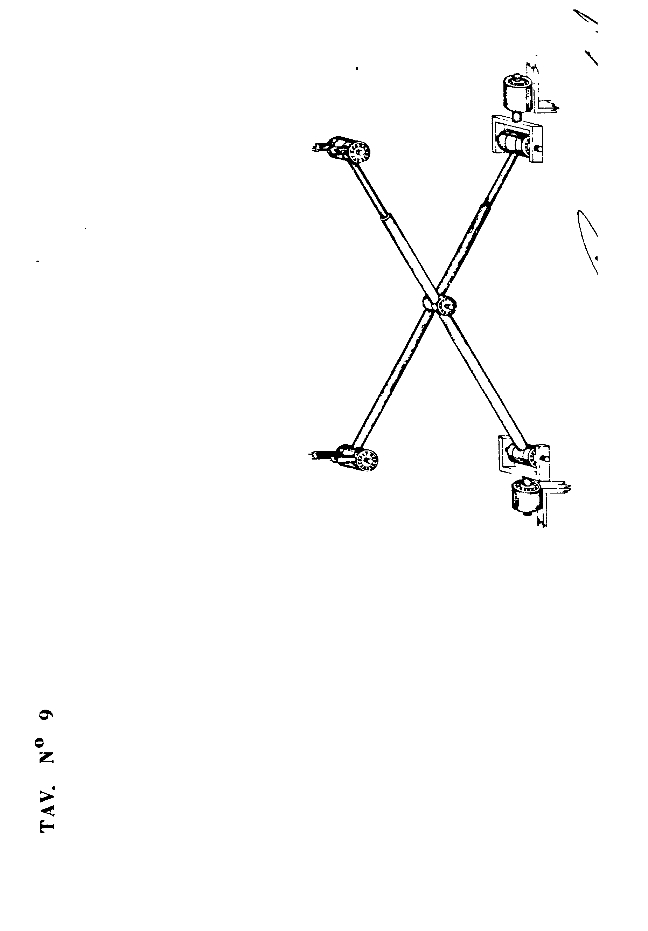

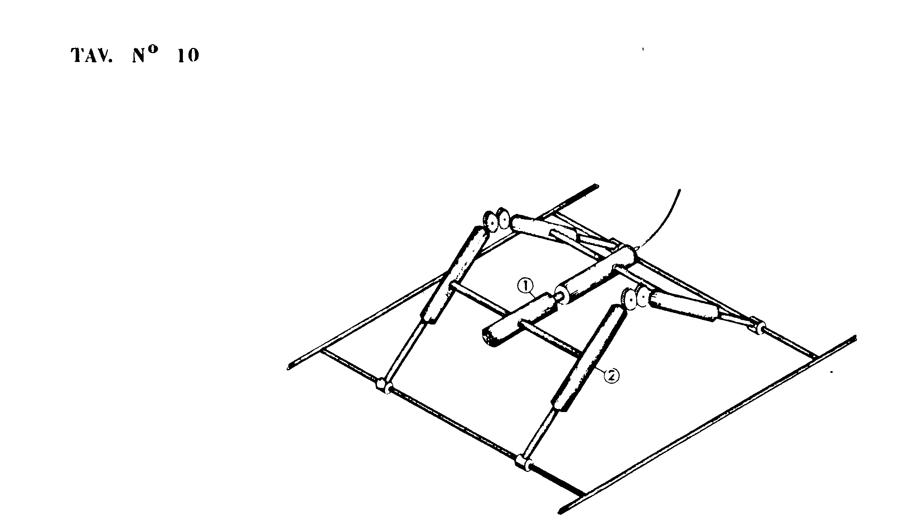

| X | The present search report has been drawn up for all claims | | |
|---|---|---|---|
| Place of search<br>Berlin | Date of completion of the search<br>14−11−1980 | Examiner<br>BECKER | |

EPO Form 1503.1  06.78